# EUROPEAN PATENT APPLICATION

(11) **EP 1 783 052 A1**
(43) Date of publication of application: **09.05.2007**
(21) Application number: 06466014.5
(22) Date of filing: 03.11.2006
(51) Int. Cl.: B65B 9/20, B65B 51/30

(54) **Method and apparatus for sealing the longitudinal edges of bags in a form fill and seal machine**

(30) Priority: 04.11.2005 CZ 20050691
(71) Applicant: Velteko, s.r.o., 258 77 Vlasim (CZ)
(72) Inventor: Smid, Frantisek, 257 64 Zdislavice (CZ)
(74) Representative: Langrova, Irena

(57) **Abstract**

Sealing the edges (8) on a continually travelling form-fill pipe (9) is accomplished in the sealing zone (10) whereof the edges (8) are treated by the heat and pressure. Upon completion of sealing the edges (8) of a single form-fill and a seal bag the application of the heat and pressure ceases. When formed unsealed edges (8) of the following seal bags are transported to the sealing zone (10), the whole procedure will be repeated. Apparatus to implement the procedure comprises the forming collar (2) determined to shape the packaging material (1) into the hosepipe (9). It passes to the charging tube (3) enabling to shape the edges (8). There is a floating frame (6) integrated with the sealing jaws (4) situated within the sealing zone (10) including the gears (5) that executes the synchronized reverse motion in the parallel direction to the direct axis of the charging tube (3). When the shaped edges (8) slide between the sealing jaws (4) in the duration of their motion, the sealing jaws will clamp and the edges (8) will be sealed. Upon completion of sealing, the whole procedure will be repeated within sealing edges (8) of other form-fills and seal bags.

## Description

### Technical Field

The Invention focuses on the method of sealing the edges on a continually travelling packaging material while manufacturing form-fills and seal bags and the apparatus suitable for their implementation.

### State of the Prior Art

There are known methods as well as known apparatus for sealing of edges on continually travelling packaging material while manufacturing form-fills and seal bags. The point is that the form-fills and seal bags manufactured by winding up the flat packaging material to produce a form-fill pipe sealed both longitudinally and transversely. The seal bag filled with packaged goods made by a transverse seal is sealed and simultaneously a new seal is manufactured on another seal bag prior to its charging. Two or more edges sealed longitudinally could be implemented before sealing the form-fill and seal bag. The edges sealed longitudinally should not only seal the form-fill pipe, but reinforce the seal bag, as well. Based on the disposition of the appliances, the edges strengthen either the bottom or the body of seal bags. There is a known method of continuous sealing of such edges based on the fact that each of those edges is sealed by means of a continuous heated tape travelling in the direction of packaging material movement. However, facilities to implement such a sealing method are rather complex. Another method of continuous sealing of edges employs fixed heated jaws and the edges are hot-stretched in between them. The packaging material producing the edges is heated within the space of the fixed jaws and subsequently, by the action of a compressive force, for instance by some pulley system or compressed air, is sealed. The disadvantage of such a sealing procedure is in its employment limited to a certain packaging material assortment.

### Disclosure of the Invention

Alleged deficiencies are eliminated to a great extent by sealing the edges while manufacturing form-fills and seal bags on a contunually travelling form-fill pipe formed on the basis of winding up the packaging material. The Subject Matter of the Invention consists in the fact that the travelling form-fill pipe equipped with shaped edges approaches the sealing zone, it is treated with heat and under the pressure of sealing jaws travelling in the same direction and velocity as the packaging material over the period of their movement through sealing. Thus, the edges within the reach of the sealing jaws on a continually travelling form-fill pipe in the sealing zone are manufactured. After sealing the edges the heat and pressure effect developed by sealing the edges is ceased, and the pipe with unsealed edges approaches the sealing zone and the whole cycle will be repeated. Apparatus to implement such a procedure consist of the forming collar to shape the form-fill pipe, the charging tube adjusted to shape the edges, sealing jaws defined to seal the edges including their driving gear enabling a grip as well as their separation and a floating frame holding all sealing jaws and their associated driving gears. The Subject Matter of the Invention is based on the fact that the floating frame holding all sealing jaws and their attached driving gears, and situated in the space bellow the forming collar, is adjusted to implement synchronized reverse motion within the sealing zone regarding that under the heat and pressure effect applied to the edges, the direction and velocity of its movement are equal as the direction and velocity of the packaging material movement. The advantage of such a procedure determined by the Invention is defined to enable to develop appliances with a less complex construction compared to the solution employing heated tapes. The further advantage observed is considered to be able to accomplish sealing of all common packaging materials.

### Review of Figures

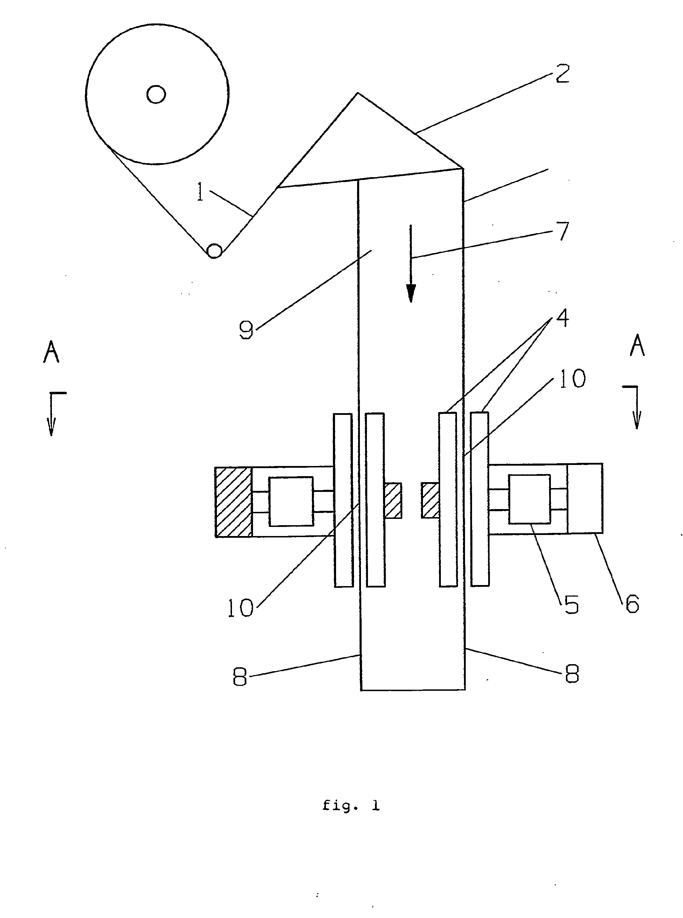

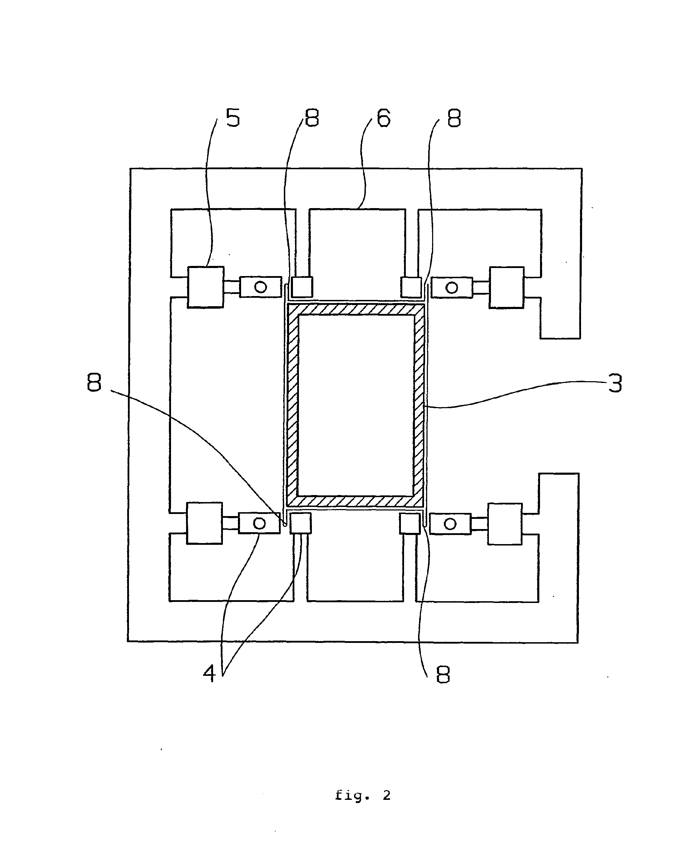

The Invention will be clarified by virtue of the Project Drawings in detail, Figure 1 depicts the layout of appliances demonstrating the procedure implemented in sealing the edges located on the continually travelling packaging material, the Longitudinal Section and Figure 2 depict the facility section in the A-A level.

### Examples of Invention Implementation

The form-fills and seal bags with edges are manufactured from a continually travelling flat packaging material 1 winded up to form the unsealed pipe 9. The surface of unsealed pipe 9 is shaped into the edges 8 by a known procedure to be prepared for sealing. When the continually travelling unsealed pipe 9 equipped with edges 8 reaches the sealing zone 10, the edges are under the effect of heat and pressure for the duration of its run through the sealing zone where the edges 8 are sealed, essentially. Upon sealing the edges 8 the action of heat and pressure is disconnected till the time the unsealed shaped edges 8 approach the sealing zone 10 in the direction 7, and the whole manufacturing cycle will be repeated.

Apparatus suitable for sealing the edges 8 situated on continually travelling form-fill pipe 9 while manufacturing the form-fills and seal bags comprises the forming collar 2 (Fig. 1) to shape the form-fill pipe 9 connected to the charging tube 3 (Fig. 2). The charging tube 3 is adjusted by a known procedure to shape the edges 8. There is a sealing zone 10 bellow the forming collar 2. The floating frame 6 is located in the sealing zone 10 adjusted to implement synchronized reverse motion corresponding with direct axes of the charging tube 3. Sealing jaws 4 are fixed to the floating frame 6 equipped with the driving gears 5. Thei performance 4 is controlled by driving gears 5 to manufacture the edges 8. They ensure the sealing jaws 4 approach towards edges 8 during sealing and their separation upon completion of the whole process.

Apparatus (Fig. 1,2) suitable for sealing edges 8 on continually travelling form-fill pipe 9 while manufacturing the seal bags work as followed. Flat strip packaging material 1 runs off a single coil and is transferred to the forming collar 2 to be shaped as unsealed form-fill pipe 9 which passes into the charging tube 3. The charging tube 3 is adjusted by a know procedure to shape edges 8. The pipe 9 slides along the charging tube 3 continually in the direction 7. The edges 8 are formed on the surface of the form-fill pipe 9 at such a motion. There are four edges 8 formed on the form-fill pipe 9 as given by the example of a detailed implementation (Fig. 2). When the form-fill pipe 9 equipped with formed edges 8 approaches the sealing zone 10 during its continuous movement, edges 8 will slide into the space developed between sealing jaws 4. Based on the initiation of the gears 5 sealing jaws 4 will clamp formed edges 8 longwise corresponding to the length of sealing jaws 4 and generate heat and pressure on formed edges 8. The floating frame 6 together with jaws 4 and their gears 5 shift simultaneously towards its bottom position at the same velocity and direction as is the velocity and movement direction of the hosepipe 9 sliding along the charging tube 3. In the duration of such a motion are the edges 8 sealed. Upon completion of the edges sealed 8, the gears 5 of sealing jaws 4 will release a signal to their opening. The sealing jaws 4 will open and the floating frame 6 together with the sealing jaws 4 will restore their original positions counter-clockwise the movement of the form-fill pipe 7 and the whole cycle will be repeated.

### Industrial Availability

The Invention could be employed with continually operating packaging machinery, particularly in goods packaging to form-fills and seal bags manufactured from a single roll of the flat packaging material equipped with reinforced longitudinally sealed edges.

## Claims

1. The method of sealing the edges (8) while manufacturing form-fills and seal bags on a continually travelling form-fill pipes (9) formed by winding up the packaging material (1) **characterized by** the fact that the continually travelling form-fill pipe (9) equipped with formed edges (8) approaches the sealing zone (10), where the formed edges (8) are treated by the heat and pressure resulting in their sealing on continually travelling form-fill pipe within the sealing zone (10) and upon completion of edges (8) sealed, the application of heat and pressure applied to them ceases, and when edges of the following seal bags yet unsealed (8) are transferred to the sealing zone (10), the whole cycle will be repeated.

2. Apparatus to implement the procedure in compliance with the Patent Claim 1 consisting of the forming collar (2) determined to shape the packaging material (1) into the form-fill pipe (9), which is connected to the charging tube (3) adjusted to shape edges (8) **characterized by** the fact that there is the sealing zone (10) in the space bellow the forming collar (2), in which there is the floating frame (6) adjusted to implement synchronized reverse motion in the direction parallel to the direct axis of the charging tube (3) regarding the sealing jaws (4) fixed to the floating frame (6) together with their gears (5).
